Europäisches Patentamt

(19) European Patent Office

Office européen des brevets

(11) Publication number: **0 289 177**
**A2**

(12) # EUROPEAN PATENT APPLICATION

(21) Application number: 88303416.7

(51) Int. Cl.⁴: **F16D 55/14**

(22) Date of filing: 15.04.88

(30) Priority: 29.04.87 GB 8710160

(43) Date of publication of application:
02.11.88 Bulletin 88/44

(84) Designated Contracting States:
DE FR GB IT

(71) Applicant: **LUCAS INDUSTRIES public limited company**
**Great King Street**
**Birmingham, B19 2XF West Midlands(GB)**

(72) Inventor: **Henson, Eric**
**14 Glade Close**
**Coedeva Cwmbran Gwent NP44 4TF**
**Wales(GB)**

(74) Representative: **Spall, Christopher John et al**
**BARKER, BRETTELL & DUNCAN 138 Hagley Road**
**Edgbaston Birmingham B16 9PW(GB)**

(54) **Improvements in self-energising disc brakes.**

(57) In a self-energising disc brake, a stationary intermediate disc (11) is located between a pair of rotatable friction discs (1, 2, 3, 4) on at least one side of an actuator mechanism (20). At least one of the friction discs comprises a metal plate (6) provided on the side of the plate remote from the intermediate disc (11) with a lining (7,8) of friction material and the opposite side defining a planar braking face. The intermediate disc (11) comprises a metal plate (13) provided on at least one side with a lining (14) of friction material with which the planar braking face is engageable when the brake is applied.

FIG.1.

## IMPROVEMENTS IN SELF-ENERGISING DISC BRAKES

This invention relates to self-energising disc brakes of the kind in which rotatable friction discs provided with linings of friction material are adapted to be brought into engagement with spaced opposed braking surfaces in a housing by an actuator mechanism comprising pressure plates located between the friction discs and centred by stationary pilot lugs, and balls or rollers located in co-operating oppositely inclined recesses in the adjacent faces of the pressure plates, the application of the brake is initiated by moving the pressure plates angularly in opposite directions, and the pressure plates then move apart, due to the tendency for the balls or rollers to ride up ramps defined by the edges of the recesses, and into engagement with the friction discs which are urged into engagement with the braking surfaces, the pressure plates being carried round with the friction discs until one is arrested by the engagement of a lug on the plate with a drag-taking stop abutment in the housing, and the continued angular movement of the other pressure plate providing a servo action.

Self-energising brakes of the kind set forth may be dry or they may be made of the liquid cooled type, and such brakes are commonly used in tractors and like vehicles and are hereinafter called brakes of the kind set forth.

In brakes of the kind set forth it is preferred to construct the linings from organic non-metallic materials rather than inorganic metallic materials. For example the linings may be constructed by powder, moulding or felting techniques. Typically powder is applied to sintered material, moulding to resin, and felting to paper. Such materials are generally known as resin bonded fibre (RBF). Such organic material has a relatively high co-efficient of friction ($\mu$) and is relatively quiet in operation whereas conventional inorganic metallic, suitably sintered, material has a relatively low ($\mu$) and is relatively noisy in operation.

It is a problem, however, that in brakes of the kind set forth excessive wear of non-metallic (RBF) linings takes place when the linings are subjected to high energy braking of long duration. In particular, when an intermediate stationary disc comprising a planar metal plate is disposed between a pair of rotatable friction discs, the degradation of lining material is most severe on the linings which engage with opposite faces of the intermediate disc when the brake is applied. This is because the energy distribution across the brake is such that the intermediate disc has to absorb twice the energy of that on the other faces. In addition thermal conductivity of RBF linings is less than that of inorganic metallic materials and such linings are susceptible to degradation if subjected to temperatures above 250°C. When an intermediate disc in the form of a planar plate is subjected to heat input from both sides, if a sufficient cooling medium, suitably oil, is not available during abusive high level brake drags, the linings adjacent to the intermediate disc will dry out and degrade.

According to our invention in a disc brake of the kind set forth a stationary intermediate disc is disposed between a pair of friction discs on at least one side of the actuator mechanism, and at least one of the friction discs comprises a rotatable metal plate provided on the side of the plate remote from the intermediate disc with a lining of friction material with the opposite side of the plate defining a planar braking face, the intermediate disc comprising a metal plate provided on at least one side with a lining of friction material with which the planar braking face on the rotatable metal plate is engageable when the brake is applied.

Effectively a lining is transferred from a rotatable friction disc to the stationary disc. By this transfer an equalisation of energy per force can be achieved with the energy at the intermediate disc substantially halved. This results in a reduction in temperature and damage to the transferred lining, particularly when the lining is of RBF.

Preferably the friction linings from the sides of both friction discs which are adjacent to opposite sides of the intermediate disc are transferred to the plate of the intermediate disc. This serves to distribute the energy even more evenly across the brake.

When the brake is provided with a pair of friction discs and a stationary intermediate disc on both sides of the actuator mechanism, both intermediate discs may be provided with friction linings on one or both sides with which complementary planar faces of the adjacent friction discs are engageable.

Two embodiments of our invention are illustrated in the accompanying drawings in which:-

Figure 1 is a longitudinal section through a self-energising vehicle brake; and

Figure 2 is a longitudinal section through a similar brake.

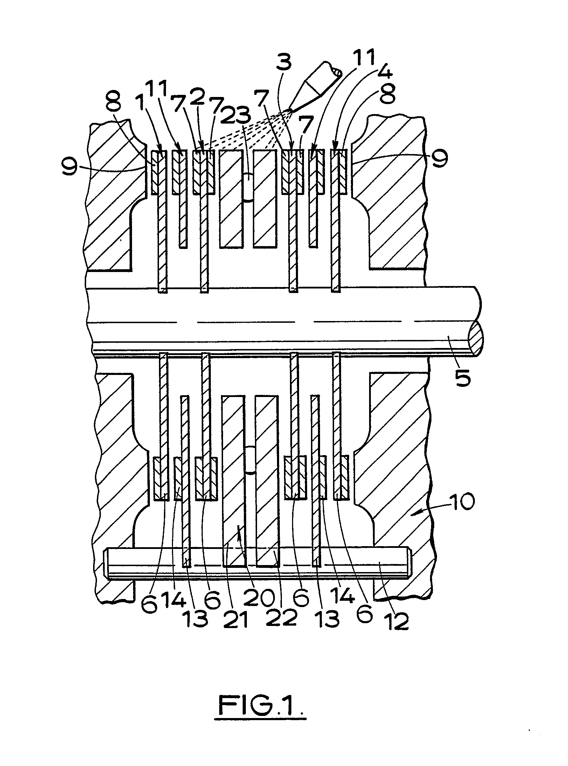

In the brake illustrated in Figure 1 of the accompanying drawings four rotatable friction discs 1, 2, 3 and 4 are splined for sliding movement on a rotatable shaft 5. Each disc includes a metal core plate 6. The core plates 6 of the inner discs 2 and 3 are provided on opposite sides with annular linings 7 of a non-metallic material, suitably RBF, and the outer discs 1 and 4 are provided on their outer faces only with similar linings 8 which face annular braking faces 9 at opposite ends of a housing 10.

An intermediate, non-rotatable, stationary disc 11 is located between each pair of inner and outer discs 1, 2, 3 and 4 respectively. Each disc 11 is keyed against rotation with respect to the housing 10 by means of an anchor pin 12 which extends between opposite ends of the housing 10. Each disc comprises a metal plate 13 of annular outline, and annular linings 14 of a non-metallic material, suitably RBF, are carried by the faces of the plates 13 which face planar faces of the core plates 6 of the outer friction discs 1 and 4.

An actuator mechanism 20 is disposed between the inner friction discs 2 and 3. As illustrated the mechanism 20 comprises a pair of pressure plates 21, 22 which are centred by angularly spaced pilot lugs in the housing of which one is defined by the anchor pin 12, and balls or rollers 23 located in co-operating oppositely inclined recesses in the adjacent faces of the pressure plates 21, 22. The outer faces of the pressure plates 21, 22 constitute braking faces.

The application of the brake is initiated by moving the pressure plates 21, 22 angularly in opposite directions which causes the pressure plates 21, 22 to move axially relatively away from each other due to the tendency for the balls 23 to ride up ramps defined by the end faces of the recesses. This urges the friction discs 1, 2, 3 and 4 into engagement with the braking surfaces 9 on the housing 10 and the intermediate discs 11. The pressure plates 21 and 22 are then carried round with the discs 1, 2, 3 and 4 until one is arrested by the engagement of a lug on a respective plate with a drag-taking abutment, suitably the pin 12, whereafter continued angular movement of the other plate provides a servo action.

When the brake is applied the brake applying force is transmitted from the actuator mechanism 20 through the inner discs 2 and 3 and the disc 11, to the outer discs 1 and 4.

When the brake is applied the planar faces of the plates 6 of the outer discs 1 and 4 engage with the linings 14, whereby substantially to halve the energy at the disc 11.

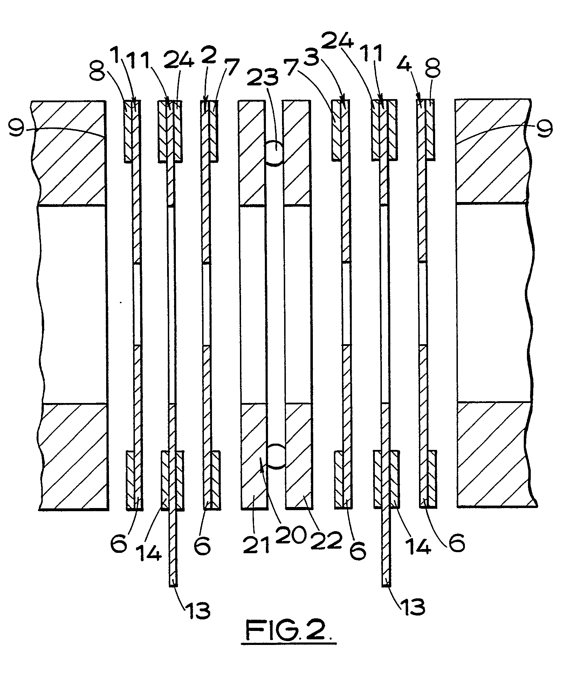

In the brake illustrated in Figure 2 of the drawings the friction linings 7 are omitted from the outer faces of the friction discs 2 and 3 so that the metal core plates 6 of the discs 2 and 3 present planar braking faces. Annular friction linings 24 are carried by the adjacent faces of the intermediate stationary disc 13. Thus the discs 13 are provided on both sides with friction linings.

The construction and operation of the brake of Figure 2 is otherwise the same as that of Figure 1 and corresponding reference numerals have been applied to corresponding parts.

## Claims

1. A self-energising disc brakes in which rotatable friction discs, (1,2,3,4) provided with linings (7,8) of friction material are adapted to be brought into engagement with spaced opposed braking surfaces in a housing (10) by an actuator mechanism (20) comprising pressure plates (21,22) located between the friction discs (2,3) and centred by stationary pilot lugs, and balls (23) or rollers located in co-operating oppositely inclined recesses in the adjacent faces of the pressure plates (21,22), the application of the brake is initiated by moving the pressure plates (21,22) angularly in opposite directions, the pressure plates (21,22) then move apart due to the tendency for the ball (23) or rollers to ride up ramps defined by the edges of the recesses, and into engagement with the friction discs (2,3) which are urged into engagement with the braking surfaces, the pressure plates (21,22) being carried round with the friction discs (1,2,3,4) until one is arrested by the engagement of a lug on the plate with a drag-taking stop abutment (12) in the housing (10), and the continued angular movement of the other pressure plate provides a servo action and in which a stationary intermediate disc (11) is disposed between a pair of friction discs (1,2) on at least one side of the actuator mechanism (20) characterised in that at least one of the friction discs (1,2) comprises a rotatable metal core plate (6) provided at least on the side of the plate remote from the intermediate disc with a lining (7,8) of friction material with the opposite side of the plate defining a planar braking face, the intermediate disc (11) comprising a metal plate (13) provided on at least one side with a lining (14) of friction material with which the planar braking face on the rotatable metal plate is engageable when the brake is applied.

2. A disc brake according to Claim 1 characterised in that the friction linings (14,24) are provided on both sides of the plate (13) of the intermediate disc (11).

3. A disc brake according to Claim 1 or Claim 2 characterised in that the brake is provided with a pair of friction discs (1,2,3,4) and a stationary intermediate disc (11) on both sides of the actuator mechanism (20).

4. A disc brake according to any preceding claim characterised in that the annular intermediate disc (11) is keyed against rotation with respect to a housing 10 by means of an anchor pin 12 which extends between opposite ends of the housing 10.

5. A disc brake according to any preceding claim characterised in that the linings (7,8,14,24) are of resin bonded fibre.

FIG.1.

FIG. 2.